# FASCICULE DE BREVET EUROPEEN

(11) **EP 0 478 474 B1**
(45) Date de publication et mention de la délivrance du brevet: **14.06.1995**
(21) Numéro de dépôt: 91420330.2
(22) Date de dépôt: 17.09.1991
(51) Int. Cl.: A01G 1/00

(54) **Substrat biologiquement enrichi, son procédé de fabrication et ses applications à la régradation des végétations pionnières**
Biologisch angereichertes Substrat, dessen Herstellungsverfahren und dessen Verwendung bei der erneuerten Einstufung von Pioniervegetationen
Biologically enriched substrate, its manufacturing process and its uses in the regradation of pioneer vegetations

(30) Priorité: 18.09.1990 FR 9011715
(43) Date de publication de la demande: 01.04.1992
(73) Titulaire: Chiaffredo, Michel, F-69400 Pouilly le Monial (FR); Figureau, Claude, F-44000 Nantes (FR)
(72) Inventeur: Chiaffredo, Michel, F-69400 Pouilly le Monial (FR); Figureau, Claude, F-44000 Nantes (FR)
(74) Mandataire: Karmin, Roger

(56) Documents cités:
- EP-A- 0 208 805
- WO-A-85/03619
- WO-A-87/02659
- WO-A-87/02660
- DE-B- 2 920 700
- FR-A- 2 099 177
- FR-A- 2 122 644
- FR-A- 2 639 179
- US-A- 3 889 418
- US-A- 3 969 844
- US-A- 3 979 198
- US-A- 4 168 962
- WORLD PATENTS INDEX LATEST Section Ch, Week 9010, 26Janvier 1990 Derwent Publications Ltd., London, GB; Class C, AN 90-071177& JP-A-02 023 860 (BCC TECHN KK)

## Description

La présente invention concerne un substrat biologiquement enrichi, son procédé de fabrication et ses applications à la regradation des végétations pionnières.

Le problème de recréation de végétations naturelles devient de plus en plus brûlant en raison de la disparition lente et progressive de certains milieux à l'échelle d'un pays, voire d'un continent ce qui impose de préserver les biocénoses.

Il devient donc nécessaire de recréer des végétations naturelles visant à remettre en place les végétations initiales qui ont été bouleversées.

On a pu également constater la réduction de la qualité et du potentiel génétique offert par la flore sauvage non domestiquée ; certains végétaux disparaissent à l'intérieur de biocénoses ; or ces végétaux auraient pu contribuer à la fabrication des médicaments ou de la nourriture de demain ou auraient pu servir à l'amélioration de certaines plantes utiles, qu'elles soient comestibles, médicinales ou destinées à des applications industrielles.

Il existe actuellement de nombreux procédés visant à reconstituer les milieux phytoécologiques perturbés ; l'examen des différentes solutions proposées à l'échelle mondiale a toutefois amené les inventeurs à constater qu'aucune solution satisfaisante n'a été trouvée, que ce soit pour stabiliser les sites ou pour implanter des espèces végétales pionnières.

Les opérations d'engazonnement hydraulique sur un sol inorganique dénudé constituent à l'heure actuelle un des procédés de regradation les plus utilisés. Des semences sont préalablement mélangées à de l'eau, à des engrais, à des substances destinées à améliorer le sol physiquement et chimiquement ainsi qu'à des substances adhésives (alginates, dérivés de cellulose, latex...).

Ces opérations d'engazonnement hydraulique ne permettent pas toujours d'obtenir des résultats positifs. Il en est notamment ainsi quand le sol est instable (sable, argile...) , dans le cas où la xéricité s'élève au dessus d'un certain seuil (xéricité saisonnière prononcée, conduisant à des dépérissements importants en été), ainsi que dans le cas de thermophilie saisonnière ne convenant pas aux espèces artificielles introduites.

D'autre part, certains substrats utilisés sont instables ; les recouvrements apportés (simple dépôt d'un film d'alginate, de cellulose ou de latex) sont fragiles et, en cas de pluie abondante, les semences sont entraînées avant leur levée.

Enfin ces techniques utilisent des quantités importantes d'engrais, et essentiellement d'engrais azotés, pour tenter d'obtenir, dès la première année, un bon développement de l'engazonnement. Or, on connait bien aujourd'hui les dégâts qu'occasionnent ces engrais azotés sur l'environnement en raison notamment de la présence de nitrates dans les nappes phréatiques.

Par ailleurs, les opérations d'engazonnement hydraulique sont des réalisations anthropiques et artificielles qui ne peuvent s'inscrire dans un paysage naturel.

Dans quelques cas précis d'engazonnement hydraulique classique, on constate une réussite partielle, et ceci parce que quelques plantes apportées sous forme de graines se sont bien adaptées. Il existe toutefois dans ce cas une pollution génétique et un danger pour la flore indigène de la concurrence pour l'occupation des sites : dans bien des cas, c'est la plante introduite qui l'emporte.

On peut citer, par exemple, l'Erigeron canadensis, mauvaise herbe apparue en début de siècle en France, ou l'Elodea canadensis dont la croissance alla jusqu'à empêcher la circulation sur les canaux en Angleterre vers 1930. On peut également citer Bacharis halimifolia qui, suite à son emploi dans les jardins, est en train de devenir un fléau pour les marais salants atlantiques ou les Genêts du Nord du Portugal, introduits sur les bords d'autoroutes et qui empêchent l'arrivée du genêt (Sarothamnus scoparius).

On a pu en effet constater que les plantes apportées ne sont pas toujours adaptées, ce qui fait qu'elles regressent plus ou moins lentement. Le sol se déstabilise plus ou moins ou encore il se recolonise naturellement mais alors, selon les données du caractère thermoxérophile du milieu ensemencé, la régression peut durer de 2 à 10 ans et il faudra, selon les cas, de 5 à 25 ans pour que se développe une colonisation naturelle. Dans ce cas pourtant, les espèces naturelles qui coloniseront seront peu nombreuses du fait de l'isolement de ces sites par rapport à des milieux naturels identiques (réservoir de diaspores).

Il devient donc nécessaire de résoudre à la fois le problème technique de la stabilisation et celui de la reconstitution végétale.

Le phénomène de colonisation des sols suit un schéma identique sous toutes les latitudes, sous tous les climats ; il est plus ou moins rapide ou partiel selon le degré de xéricité ou selon la nature de l'érosion.

Ce schéma, qui reste le même en plaine, au bord de la mer et en montagne jusqu'à 3000 mètres, a réussi à former sur notre planète en quelque 400 millions d'années la végétation luxuriante que nous connaissons. Par exemple, il peut être résumé ainsi, en milieu acide :
- Stade 1 : sol nu inorganique et non fertile
- Stade 2 : essentiellement constitué de Cyanophycées (algues bleues) - 0,5 mm de matière organique : 4 à 10 espèces ou plus, selon les sites.
- Stade 3 : Bryophytes (mousses) - 5 à 25 mm de matière organique
- type moder : 3 à 6 espèces ou plus selon les sites.
- Stade 4 : Prépelouse à Thérophytes (Bryophytes et plantes annuelles) - productivité importante de matière organique - épaisseur : 25-70 mm - type moder ; prépelouse en phytosociologie des classes suivantes : Festuco-Brometea, Lygeo-Stipetea, Sedo-Scleranthetea, Poetea-bulbosae, Tuberarietea.
- Stade 5 : Pelouse à Graminées dominantes - Matière organique en accumulation - épaisseur 60 - 300 mm - type moder, puis ranker.

Tous ces stades sont nécessaires à la création d'humus (mull ou moder) qui constitue le départ de l'évolution des sols vers des rankers en coévolution avec l'implantation du stade pelouse. Or, on sait qu'il a fallu de 2000 à 3000 ans pour obtenir des rankers alpins ou atlantiques.

Il faut compter entre 5 et 20 ans, en situation thermo-xérophile instable pour voir les premières Bryophytes occuper la surface d'un sol dégradé. Selon le degré de xéricité, il faut entre 10 et 30 ans pour qu'un sol suffisamment épais permette l'installation de la pelouse.

Au cours de nombreuses recherches effectuées dans le but de reconstituer de façon satisfaisante les milieux phytoécologiques perturbés, les inventeurs ont pu déterminer l'importance fondamentale des stades 2, 3 et 4 mentionnés ci-avant. Ils ont déterminé que la condition première pour I'implantation (naturelle ou artificielle) d'espèces colonisatrices pionnières consistait à établir dès le départ un milieu riche à la fois en Cyanophycées et en Bryophytes, ce qui constitue le maillon essentiel pour une colonisation ultérieure par des végétaux.

Ils ont ainsi découvert qu'il était possible d'assurer une stabilisation et une végétalisation spontanée rapide des terrains nus (roche-mère dégradée ou sous-sol) si l'on arrivait à créer, en quelques mois, un stade super-pionnier à Cyanophycées-Bryophytes associé aux espèces végétales formant l'association supérieure dite prépelouse et ils ont réussi à mettre au point un substrat solide, à transporteur liquide, biologiquement enrichi, particulièrement adapté à ce but.

Le substrat biologiquement enrichi selon l'invention est caractérisé en ce qu'il est essentiellement constitué d'un matériau organique, riche en colonies de Cyanophycées et en colonies de protonémas de Bryophytes, *intimement mélangé* à un support non érosif.

*DE-B-2920700 décrit et revendique des éléments de construction en béton sur la face visible desquels on dispose un matériau poreux imprégné de matières telles que l'agar-agar, préparation mucilage végétale chimique pure à base d'algues marines.*

L'utilisation de Cyanophycées (cyanobactéries dénommées aussi "algues bleues-vertes") pour l'amélioration des sols a déjà été décrite. C'est ainsi que WO-A-87/02660 décrit une composition comprenant, entre autres composants, un mélange de microorganismes photosynthétiques qui sont choisis parmi des algues (bleues-vertes) et plus spécialement parmi tout un groupe de souches de cyanobactéries ou Cyanophycées. Le procédé de multiplication des algues bleues du sol dans des solutions nutritives qu'il décrit également consiste à sélectionner des souches pures multipliées par Zygospores. Les algues bleues sont, dans ce cas, considérées comme agent de stabilisation en elles mêmes.

De même, dans Reclamation and Revegetation Research, 3 (1984) 49-63, J. Ashley et S.R. Rishforth ont étudié la croissance des algues vertes et bleues et leur utilisation possible pour la recolonisation des déchets de schistes bitumineux.

L'étude qu'ont fait les inventeurs de ces souches de Cyanophycées leur a fait apparaître que, utilisées seules, ces algues ne permettaient pas d'obtenir un résultat satisfaisant, mais qu'elles pouvaient constituer un élément décisif pour conditionner un substrat et préparer l'arrivée de Bryophytes qui sont alors les éléments de base de la reconstitution du milieu.

Le procédé selon l'invention a donc consisté à produire des Bryophytes en se servant des potentialités offertes par les Cyanophycées pour leur propre colonisation par les protonémas des Bryophytes. Il est ainsi possible de créer substrat vivant capable de se coloniser rapidement selon la saison et le milieu d'application.

Cette technique permet de raccourcir les temps de colonisation des végétaux inférieurs qui forment la prépelouse (stade riche en Bryophytes "mousses") représentant plus de 80 % de la végétation.

L'utilisation de ce substrat permet une stabilisation et une végétalisation spontanée des terrains nus inorganiques (roche-mère dégradée ou sous-sol) par la création, en quelques mois, d'un stade pionnier à Bryophytes associé aux espèces végétales formant l'association végétale supérieure dite prépelouse.

Le stade à Cyanophycées est important car il conditionne l'évolution du milieu. Les Cyanophycées jouent un rôle décisif dans la formation de croûtes reviviscentes impérativement nécessaires pour l'installation des végétations à Bryophytes de la prépelouse.

Les Cyanophycées hétérocystées de ces croûtes jouent un grand rôle dans la fertilisation des milieux du fait de leur aptitude à fixer l'azote minéral de l'air et de le transformer en azote assimilable disponible pour les végétaux capables de coloniser ces milieux.

La couverture imperméable formée par l'enchevêtrement des trichomes et cénobes des Cyanophycées et des polysaccharides qui les entourent joue un rôle inhibiteur sur les germinations des herbes rudérales des décombres et limitent l'apparition des végétations anthropiques qui s'installent après les travaux.

L'adjonction aux Cyanophycées de protonémas de Bryophytes, dont le développement n'est possible que dans le gel polysaccharidique entourant les Cyanophycées contribue, de façon décisive, et c'est là une des caractéristiques originales de l'invention, à élaborer la matière organique indispensable au développement ultérieur des végétaux supérieurs.

La présente invention permet d'apporter sur un sol inorganique tous les composants biologiques nécessaires, en même temps et en association, accompagnés d'un substrat non érosif qui sert de support de culture à ces premiers végétaux.

Les éléments végétaux supérieurs sont apportés sous forme de graines (en nombre restreint) en même temps que ce milieu biologique ou dans une étape ultérieure ; ces éléments végétaux servent de porte-graines pour une colonisation dynamique.

En effet, dans le cas où l'on dispose d'un sol cultivé organique, il n'y a plus d'obstacles à la croissance des végétaux supérieurs.

Par contre, dans les situations où le milieu inorganique est trop instable pour que se forme le schéma naturel de colonisation décrit ci-avant, il faut aux végétaux des adaptations pionnières pour qu'ils puissent s'accommoder de ce type de milieu. Les vrais végétaux pionniers sont adaptés à la mobilité de ces systèmes et peuvent puiser le peu qui leur est nécessaire dans ces matériaux inorganiques.

C'est ainsi que l'on peut citer :
- en milieu alpestre : la flore de moraines et la flore d'éboulis, se trouvant aussi en abyssales dans les délaissés des torrents où elles retrouvent dans les gravières l'instabilité de leur moraine ou de leur éboulis.
- en milieu de plaines, les plantes d'éboulis ou de sol remué se retrouvent fréquemment dans certains sols cultivés : Ex. Tussilago-farfara dans les vignes.
- en milieu maritime, c'est la flore des dunes mobiles.

Les vrais végétaux supérieurs pionniers sont ceux qui sont capables de coloniser des milieux inorganiques instables et qui disparaissent lors de la stabilisation de ces milieux.

Les super-pionniers (Cyanophycées et Bryophytes) sont des successions de végétaux inférieurs qui mettent en marche un processus de stabilisation accompagné d'un processus de fertilisation par leurs propres productions (azote et matière organique) et qui engendrent une dynamique liée à la mise en place d'un processus pédologique.

De plus, ces milieux sont colonisés très vite par un nombre important de micro-organismes animaux plus ou moins cyanophages qui contribuent à l'entretien de la litière organique, ainsi qu'à la liaison entre la production d'humus en surface (moder) avec le substrat inorganique. Ce sont des acariens, anguilulles et différents vers, non pathogènes pour la flore supérieure qui s'installe.

Le substrat selon la présente invention permet d' avoir en place, sur 1 à 3 ans tous les composants floristiques de la prépelouse à thérophytes selon les classes phytosociologiques présentes initialement afin que le milieu reconstitué soit bien l'identique d'un milieu naturel et n'en constitue pas une pâle imitation..

La base du substrat non érosif qui servira de support de culture aux végétaux super-pionniers, capables de coloniser des milieux inorganiques est constituée par un matériau argileux dans lequel sont inoculés les composants biologiques (Cyanophycées et protonémas de Bryophytes) .

Les matériaux argileux susceptibles d'être inoculés sont choisis parmi les montmorillonites, les argiles micacés (iilites, vermiculites), les kaolinites ainsi que les terres argileuses dites "terres de potier" telles que les argiles du Fuilet, Maine et Loire (France).

Outre l'argile inoculée, le substrat non érosif permettant de créer une végétation pionnière naturelle est constitué de matériaux riches en matière organique, d'amendements calcaires,d'amidon sec et de polymères hydrorétenteurs.

Les matériaux riches en matière organique sont choisis parmi la tourbe noire, dite de Carex, la tourbe blonde dite de sphaignes, le noir de Brière, les terreaux : de pailles, de feuilles, de fumiers, d'écorces de divers arbres, de sarments de vigne, de marc de raisin, d'algues marines, de sciures et copeaux de bois ainsi que parmi toutes sortes de matières organiques d'origine animale et végétales, les composts d'ordures ménagères, les composts issus de lombrics, les corps de meule de champignons de Paris, des vases de rivières ou marais.

Les amendements calcaires sont choisis parmi les calcaires, les craies phosphatées (type A et B), les marnes calcaires, les tangues ou le moer. Ils peuvent être additionnés de produits calcaires cuits tels que les chaux magnésiennes ou phosphatées (type A et B).

Les amidons utilisés sont avantageusement choisis parmi les éthers d'amidon, obtenus par modification de fécule de pommes de terre, de maïs, de riz. Les polymères hydrorétenteurs sont choisis parmi les différents polymères organiques naturels ou synthétiques, anioniques ou cationiques présentant des propriétés d'hydrorétention, tels que les polymères ou copolymères acryliques ou acryliques substitués, et tout spécialement les sels de sodium, potassium et/ou ammonium de ces polymères ou copolymères.

Selon un mode de réalisation avantageux de l'invention, des oligo-éléments (Fe, Mn, Zn, Cu, B, Mo, Co...) sont introduits en faibles quantités, seuls ou en combinaison.

Toutes les algues de la classe des Cyanophycées sont utilisables dans la présente invention, pourvu que leur écologie soit terrestre et qu'elles forment des colonies remarquables par les croûtes qu'elles laissent en période sèche.

Un autre critère de sélection est qu'elles forment les premiers stades de colonisation en situation hygrocline à xérophile et qu'elles soient colonisées par des Bryophytes sous forme de protonémas.

Parmi le grand nombre d'espèces de Cyanophycées terrestres on préfère les espèces appartenant aux genres suivants : Aphanocapsa, Aphanotece, Calothrix, Chroococcus, Gloeothece, Lyngbya, Microcoleus, Microcystis, Nostoc, Oscillatoria, Phromidium, Rivularia, Schizothrix.

Toutes les espèces de Bryophytes sont susceptibles d'être utilisées, qu'elles soient arctiques, tempérées ou tropicales.

Le procédé de fabrication du substrat selon l'invention consiste essentiellement à cultiver ensemble, sur un lit d'argile, des Cyanophycées sous forme d'association polyspécifique et des associations de Bryophytes sous forme de protonémas, ces deux associations étant conformes aux espèces présentes dans le milieu naturel à regrader, à procéder au séchage puis au broyage de cette culture, à l'épandre sur un nouveau lit d'argile pour extension de la biomasse, puis, après séchage et broyage de l'ensemble, à y incorporer des matériaux riches en matières organiques, des amendements calcaires, de l'amidon et des polymères hydrorétenteurs en partie hydratés.

La présente invention concerne également l'application du substrat biologiquement enrichi à la regradation des végétations pionnières par inclusion dans le substrat, au moment de l'épandage, d'une petite quantité de graines des espèces végétales supérieures de la prépelouse ou de la pelouse.

Le procédé de fabrication du substrat selon l'invention va maintenant être décrit en détail. Il comporte essentiellement deux étapes : une étape de préculture et une étape de culture proprement dite.

### Préculture : Production de protonémas de Bryophytes à partir de souches prélevées dans la nature

On prélève, sur un site analogue et le plus proche possible du site à regrader, des souches de Cyanophycées sous forme de croûtes ainsi que des Bryophytes. Une petite portion de ces croûtes et les Bryophytes sont mises en culture pour identification.

Selon un mode de réalisation de l'invention, la production de protonémas a lieu par voie asexuée. On procède à un épandage à sec sur un lit d'argile, maintenu humide, d'un broyat de feuilles, de tiges et de rhizoïdes sous forme pulvérulente puis on procède à une inoculation par épandage hydraulique d'un broyat de Cyanophycées déterminées, préalablement prélevées sur le site comme mentionné ci-avant.

On obtient en 2 à 3 semaines des croûtes composées d'un mélange de Cyanophycées et de protonémas de Bryophytes que l'on laisse dessécher.

Selon un autre mode de réalisation de l'invention, la production de protonémas a lieu par voie sexuée : des éléments de la Bryoflore du site à regrader sont alors apportés sous forme de spores introduites dans de la tourbe noire micronisée, puis mises en suspension dans de l'eau distillée et ensuite mélangées, à raison de 0,5 % à la suspension mixée de Cyanophycées prélevées sur le site avant son épandage. On procède à un épandage sur lit d'argile. Les croûtes sont alors obtenues en 2 à 3 mois.

### Culture extensive proprement dite - Production d'argile inoculée

On met en suspension dans l'eau la croûte argileuse de la préculture pour récupérer un film constitué de Cyanophycées et de protonémas de Bryophytes. Le film est passé au mixer à vitesse moyenne en présence d'eau pour obtenir des microcolonies de Cyanophycées contenant des fragments de protonémas de Bryophytes; ce mélange est ensuite épandu sur de l'argile pure dans les unités de production. Il se forme, au bout de une à deux semaines, de nouvelles croûtes argileuses surmontées d'un film cyanoprotonémas ; ce film est à nouveau utilisable et peut servir de culture-mère pour réensemencement de la culture suivante.

Préculture et culture sont réalisées en bac étanche d'environ 5 cm de profondeur.

Préculture et culture sont de préférence réalisées en bâtiment clos sous éclairage artificiel type horticole dans la zone des 1500/3000 Lux. De bons résultats sont obtenus sous tubes fluo, tels que ceux commercialisés sous la marque OSRAM, type Natura.

La biomasse formée par les thalles des cyanophycées et protonémas des Bryophytes forme des croûtes sur la surface de l'argile. On attend la formation de bourgeons sur les protonémas. Cet ensemble est ensuite desséché lentement jusqu'à une teneur en humidité inférieure à 15 %. Après séchage complet, les croûtes sont récoltées puis réduites et broyées en poudre ou petits granulats et incorporées aux amendements calcaires et à l'amidon. Cet ensemble est directement mélangé aux autres composants dans la cuve d'"hydroseeding" au moment de l'épandage : matériaux riches en matières organiques, polymères hydrorétenteurs.

Afin d'avoir un rendement rapide, on multiplie les rapports de production par 100 (en moyenne). A titre d'exemple, pour produire 100 m2 de biomasse de cyanophycées sur 5 mm d'argile, il faut prélever 1 m2 de croûtes. La production en série devient possible à partir des premiers 100 m2 produit en 2 à 3 semaines. Cette production en série est possible par repiquages successifs du complexe polyspécifique qui ne perd aucune de ses potentialités. Au bout de cette période de 2 à 3 semaines, les croûtes argileuses de 5 mm d'épaisseur sont desséchées en vue de leur intégration aux autres composants secs.

Les quantités (en % du volume total) des différents éléments essentiels du support du substrat selon l'invention sont ,de préférence, les suivantes :

| | |
|---|---|
| - Matériaux riches en matière organique | 20 à 30 % |
| - Argile inoculée | 10 à 20 % |
| - Amendements calcaires | 4 à 10 % |
| - Amidon sec | 2 à 6 % |
| - Polymère hydrorétenteur en partie hydraté | 40 à 60 % |

Il est toutefois bien évident qu'il ne s'agit là que d'un mode de réalisation préférentiel de l'invention et que de nombreuses variantes et combinaisons sont possibles selon le milieu minéral environnant, la flore à reconstituer et principalement les microorganismes de la microflore et la Bryoflore.

Les exemples de réalisation suivants illustreront bien l'invention sans nullement la limiter.

### Exemple 1 : Composition pour un substrat acide, pH 5 :

| | |
|---|---|
| - Matériaux riches en mat. organique acide pH 3 à 4 : | 26 % |
| - Argile inoculée : | 11 % |
| - Marnes calcaires : | 2,9 % |
| - Amidon : | 3,4 % |
| - Polymère en partie hydraté : | 56,7 % |

Ces proportions peuvent servir de référence pour toute autre combinaison à pH inférieur à 7.

Le mélange est réalisé sur place directement dans les cuves de "l'hydroseeder" et laissé en agitation pendant 15 minutes ; avant l'épandage, les quantités de substrat épandues à l'hectare sont comprises entre 40 et 100 m3. Pour une épaisseur moyenne de 6 mm. à l'état humide, on épand à l'hectare : 26 m3 de matériau riche en matière organique, 10 m3 d'argile inoculée,2,6 m3 de marnes calcaires, 3 m3 d'amidon sec, 51,5 m3 de polymère en partie hydraté.

Une application expérimentale de ce substrat, réalisée en extérieur au mois de février par des températures nocturnes moyennes de 4°C a mis 3 semaines pour être totalement colonisée.

### Exemple 2 : Composition pour un substrat neutre pH 7 :

| | |
|---|---|
| - Matériau riche en matière organique acide pH 3 à 6 : | 23 % |
| - Argile inoculée : | 11 % |
| - Marnes calcaires : | 5,6 % |
| - Amidon : | 3,4 % |
| - Polymère en partie hydraté : | 57 % |

Une étude plus précise de chaque milieu permet bien évidemment un ajustement du support.

Pour une épaisseur moyenne de 6 mm à l'état humide, on épand à l'hectare: 20 m3 de matériau riche en matière organique, 10 m3 d'argile inoculée, 5 m3 de marnes calcaires, 3 m3 d'amidon sec, 50 m3 de polymère en partie hydraté.

Une application expérimentale de ce substrat, réalisée en extérieur au mois de juillet par des températures nocturnes moyennes de 20°C a mis une semaine pour être totalement colonisée.

Dans tous les cas il est prévu d'inclure, au moment de l'épandage une petite quantité de graines des espèces végétales supérieures de la prépelouse ou de la pelouse.

Le choix des semences à introduire est fait en fonction de la saison d'épandage et des caractéristiques biologiques de l'espèce.

Si le dépôt de substrat sur le site est effectué en septembre/octobre, on introduira dans le substrat des semences des espèces bisannuelles dont la germination est automnale. Les espèces annuelles dont la germination s'effectue à la fin de l'hiver seront apportées par les techniques classiques au mois de février.

Il n'est en effet, comme déjà mentionné plus haut, pas nécessaire de créer un véritable gazon par un apport massif de semences comme le font les techniques actuelles. Les quelques semences de chaque espèce ne sont apportées qu'en qualité de "porte-graines" destinés à enrichir rapidement la composition floristique du milieu.

A titre d'exemple, trois pieds groupés de Vulpia bromoïdes, graminées annuelles des prépelouses acides ensemencés en février à l'aide du substrat selon la présente invention ont donné 143 graines fiables qui se sont réparties dans un cercle de 40 cm de diamètre. Début septembre, 14 graines ont germé laissant présager un indice de recouvrement de 60 à 80 % pour l'année suivante.

## Revendications

1. Substrat biologiquement enrichi, caractérisé en ce qu'il est essentiellement constitué d'un matériau organique riche en colonies de Cyanophycées associées à des colonies de protonémas de Bryophytes, intimement mélangé à un support non érosif.

2. *Substrat selon la revendication 1, caractérisé en ce que les Cyanophycées sont choisies parmi les algues de cette classe dont l'écologie est terrestre, qui forment des colonies remarquables par les croûtes qu'elles laissent en période sèche, et parmi celles qui forment les premiers stades de colonisation en situation allant de hygrocline à xérophile et qui soient colonisées par des Bryophytes sous forme de protonémas.*

3. Substrat selon la revendication 2, caractérisé en ce que les Cyanophycées sont choisies parmi les espèces appartenant aux genres suivants : Aphanocansa, Aphanotece, Calothrix, Chroococcus, Gloeothece, Lyngbya, Microcoleus, Microcystis, Nostoc, Oscillatoria, Phromidium, Rivularia, Schizothrix.

4. Substrat selon la revendication 1, caractérisé en ce que les Bryophytes sont choisies parmi les Bryophytes arctiques, tempérées ou tropicales.

5. Substrat selon l'une des revendications 1 à 4, caractérisé en ce que le support non érosif est essentiellement constitué d'un matériau argileux, choisis parmi les montmorillonites, les argiles micacés (iilites, vermiculites), les kaolinites ainsi que les terres argileuses dites "terres de potier" telles que les argiles du Fuilet, Maine et Loire (France),dans lequel sont inoculés les composants biologiques (Cyanophycées et protonémas de Bryophytes), qu'il comporte des matériaux riches en matières organiques choisis parmi la tourbe noire, dite de Carex, la tourbe blonde dite de sphaignes, le noir de Brière, les terreaux : de pailles, de feuilles, de fumiers, d'écorces de divers arbres, de sarments de vigne, de marc de raisin, d'algues marines, de sciures et copeaux de bois ainsi que parmi toutes sortes de matières organiques d'origine animale et végétales, les composts d'ordures ménagères, les composts issus de lombriculture, les corps de meule de champignons de Paris, des vases de rivières ou marais, des amendements calcaires choisis parmi les calcaires, les craies phosphatées (type A et B), les marnes calcaires, les tangues ou le moer, éventuellement additionnés de produits calcaires cuits tels que les chaux magnésiennes ou phosphatées (type A et B),de l'amidon sec choisi parmi les éthers d'amidon, obtenus par modification de fécule de pommes de terre, de maïs et de riz et des polymères hydro-rétenteurs choisis parmi les différents polymères organiques naturels ou synthétiques, anioniques ou cationiques présentant des propriétés d'hydrorétention, tels que les polymères ou copolymères acryliques ou acryliques substitués, et tout spécialement parmi les sels de sodium, potassium et/ou ammonium de ces polymères ou copolymères, et qu'il comporte également de faibles quantités d'oligo-éléments (Fe, Mn, Zn, Cu, B, Mo, Co...) seuls ou en combinaison.

6. *Procédé de fabrication du substrat selon l'une des revendications 1 à 4, caractérisé en ce qu'il consiste à former les premiers stades de colonisation des Cyanophycées-protonémas de Bryophytes en situation hygrocline à xérophile en cultivant ensemble, sur un lit d'argile, des Cyanophycées sous forme d'association polyspécifique et des associations de Bryophytes sous forme de protonémas, ces deux associations étant conformes aux espèces présentes dans le milieu naturel à regrader, à procéder au séchage puis au broyage de cette culture, à l'épandre sur un nouveau lit d'argile pour extension de la biomasse à produire puis, après séchage et broyage de l'ensemble, à le mélanger intimement à un support non érosif constitué de matériaux riches en matières organiques, d'amendements calcaires, d'amidon et de polymères hydrorétenteurs en partie hydratés.*

7. Procédé selon la revendication 6, caractérisé en ce que la production de protonémas a lieu par voie asexuée à partir d'un broyat de feuilles, de tiges et de rhizoïdes sous forme pulvérulente.

8. Procédé selon la revendication 6, caractérisé en ce que la production de protonémas a lieu par voie sexuée à partir des éléments de la Bryoflore du site à regrader apportés sous forme de spores.

9. Application du substrat biologiquement enrichi selon l'une des revendications 1 à 5 à la regradation des végétations pionnières par inclusion dans le substrat, au moment de l'épandage, d'une petite quantité de graines des espèces végétales supérieures de la prépelouse ou de la pelouse.

## Claims

1. A biologically-enriched substrate, characterised in that it is essentially constituted of an organic material rich in colonies of Cyanophycaea associated with colonies of protonemas of Bryophytes, intimately mixed with a non-erosive support.

2. A substrate according to Claim 1, characterised in that the Cyanophycaea are selected from among the algae of this class the ecology of which is terrestrial, which form colonies which are noticeable by the crusts which they leave during a dry period, and from among those which form the first stages of colonisation in a situation passing from hygroclinic to xerophilous, and which are colonized by Bryophytes in the form of protonemas.

3. A substrate according to Claim 2, characterised in that the Cyanophycaea are selected from among the species belonging to the following genuses: Aphanocapsa, Aphanotece, Calothrix, Chroococcus, Gloeothece, Lyngbya, Microcoleus, Microcystis, Nostoc, Oscillatoria, Phromidium, Rivularia, Schizothrix.

4. A substrate according to Claim 1, characterised in that the Bryophytes are selected from among arctic, temperate or tropical Bryophytes.

5. A substrate according to one of Claims 1 to 4, characterised in that the non-erosive support is essentially constituted of an argillaceous material, selected from among montmorillonites, micaceous clays (illites, vermiculites), the kaolinites and the clayey earths called "potter's earths", such as clays of Fuilet, Maine et Loire (France), in which the biological components (Cyanophycaea and protonemas of Bryophytes) are inoculated, that it comprises materials rich in organic matter selected from among black peat, called sedge peat, white peat, called sphagnum peat, Black of Brière, vegetable mould: of straw, of leaves, of manure, of bark of various trees, of tendrils of vines, of marc of grapes, of sea-wrack, of sawdust and wood chips and from among all sorts of organic matter of animal and plant origin, compost from domestic waste, composts originating with earthworms, spent compost from cultivated mushrooms, muds from rivers or bogs, calciferous soil improvements selected from among limestones, phosphatic chalks (type A and B), lime marls, slimy sand or polder, possibly with an addition of baked calciferous products such as magnesian or phosphated lime (type A and B), dry starch selected from starch ethers, obtained by modification of potato starch, corn starch and rice starch and water-retaining polymers selected from among the various organic natural or synthetic, anionic or cationic polymers having water-retention properties, such as acrylic or substituted acrylic polymers or copolymers, and most especially from among the sodium, potassium and/or ammonium salts of these polymers or copolymers, and in that it also comprises small quantities of oligo-elements (Fe, Mn, Zn, Cu, B, Mo, Co, etc.), individually or in combination.

6. A method for producing the substrate according to one of Claims 1 to 4, characterised in that it consists in forming the first stages of colonisation of the Cyanophycaea/protonemas of Bryophytes in a hygroclinic to xerophilous situation by cultivating together, on a bed of clay, Cyanophycaea in the form of a polyspecific association and associations of Bryophytes in the form of protonemas, these two associations being in accordance with the species present in the natural environment to be regraded, proceeding to dry and then to crush this culture, spreading it over a new bed of clay to extend the biomass to be produced, and then, after drying and crushing of the whole, mixing it intimately with a non-erosive support formed of materials rich in organic matter, calciferous soil improvements, starch and partially-hydrated water-retaining polymers.

7. A method according to Claim 6, characterised in that the production of protonemas takes place asexually from a crushed mass of leaves, stems and rhizoids in powdered form.

8. A method according to Claim 6, characterised in that the production of protonemas takes place sexually from elements of the Bryoflora of the site to be regraded supplied in the form of spores.

9. The application of the biologically-enriched substrate according to one of Claims 1 to 5 to the regrading of pioneer vegetation by inclusion in the substrate, at the moment of spreading, of a small quantity of seeds of the higher plant species of the pre-sod or of the sod.

## Patentansprüche

1. Biologisch angereichertes Substrat, **dadurch gekennzeichnet,** daß es im wesentlichen aus einem organischen Material reich an mit Kolonien von Bryophytenprotonema zusammengeschlossenen Blaualgen (Cyanophyceen)-Kolonien, innig vermischt mit einem nicht ätzenden Träger besteht.

2. Substrat nach Anspruch 1, dadurch gekennzeichnet, daß die Cyanophyceen aus den Algen der Klasse ausgewählt sind, deren Ökologie terrestisch ist, die bemerkenswerte Kolonien durch die Krusten bilden, die sie in Trockenperioden übriglassen und aus denen die die ersten Stadien der Kolonisierung in einem von hygroclin bis xerophil gehenden Zustand bilden, und die durch die Bryophyten in Form von Protonema kolonisierbar sind.

3. Substrat nach Anspruch 2, dadurch gekennzeichnet, daß die Cyanophyceen aus den Spezies ausgewählt sind, die den folgenden Gattungen angehören: Aphanocapsa, Aphanotec, Calothrix, Chroococcus, Gloeothec, Lyngbya, Microcoleus, Microcystis, Nostoc, Oscillatoria, Phromidium, Rivularia, Schizotrix.

4. Substrat nach Anspruch 1, dadurch gekennzeichnet, daß die Bryophyten unter den arktischen, gemäßigten oder tropischen Bryophyten ausgewählt sind.

5. Substrat nach einem der Ansprüche 1 bis 4, dadurch gekennzeichnet, daß der nicht ätzende Träger im wesentlichen aus einem Tonmaterial gebildet wird, ausgewählt aus den Montmorilloniten, glimmerartigen Tonmineralien (Illite, Vermiculite), Kaoliniten sowie Tonerden, genannt "Töpfererden", wie die Tone von Fuilet, Maine et Loire (Frankreich), in die die biologischen Bestandteile (Cyanophyceen und Bryophytenprotonema) eingeimpft sind, daß er Materialien reich an organischen Stoffen, die aus Schwarztorf, genannt Carex, Weißtorf, genannt der Sphaignen, Schwarz von Brière, Komposterden aus Stroh, Blättern, Mist, Rinden von verschiedenen Bäumen, Weintreber, Seealgen, Sägespänen und Holzschnitzel sowie aus allen Arten von organischen Stoffen tierischer und pflanzlicher Herkunft, Müllkompost, Kompost, aus Regenwurmkultur stammend, Mahlkörpern von Champignons, Schlämmen von Flüssen oder Sümpfen ausgewählt sind, kalkartige Bodenverbesserungsmittel, ausgewählt aus Kalksteinen, phosphatierten Kreiden (Typ A und B), Kalkmergeln, Meersand oder Poldern, eventuell unter Zusatz von gebrannten Kalkprodukten wie Magnesiumkalke oder phosphatierte Kalke (Typ A und B), Trockenstärke, ausgewählt aus den Stärkeethern, die durch Modifikation von Kartoffel-, Reis- und Maismehl gewonnen werden, und Wasser zurückhaltende Polymere, ausgewählt aus den verschiedenen natürlichen oder synthetischen, anionischen oder kationischen organischen Polymeren, die wasserhaltende Eigenschaften aufweisen, wie acrylische oder substituierte acrylische Polymere und Copolymere und insbesondere aus den Natrium-, Kalium- und/oder Ammoniumsalzen dieser Polymere oder Copolymere, und daß er auch geringe Mengen an Oligoelementen (Fe, Mn, Zn, Cu, B, Mo, Co ...) allein oder in Kombination umfaßt.

6. Verfahren zur Herstellung des Substrats nach einem der Ansprüche 1 bis 4, dadurch gekennzeichnet, daß es darin besteht, die ersten Kolonisierungsstadien der Cyanophyceen-Bryophytenprotonema in einem von hygroclin bis xerophil gehenden Zustand zu bilden, in dem Cyanophyceen in Form polyspezifischer Verbindung und Bryophytenverbindungen in Form von Protonema zusammen auf einem Tonbett kultiviert werden, wobei diese zwei Verbindungen in Übereinstimmung mit den in der erneut einzustufenden Naturumwelt vorhandenen Spezies sind, die Kultur zu trocknen, dann zu mahlen, sie auf einem neuen Tonbett für eine Vergrößerung der herzustellende Biomasse zu verteilen, dann nach Trocknung und Zermahlung der Gesamtheit, dieses innig mit einem nicht ätzenden Träger zu vermischen, der aus Materialien reich an organischen Stoffen, kalkförmigen Bodenverbesserungsmitteln, Stärke und teilweise hydratierten, Wasser haltenden Polymeren besteht.

7. Verfahren nach Anspruch 6, dadurch gekennzeichnet, daß die Protonema-Herstellung auf asexuellem Wege ausgehend von eine zerkleinerten Gemisch aus Blättern, Stengeln und Rhizoiden in pulverisierter Form durchgeführt wird.

8. Verfahren nach Anspruch 6, dadurch gekennzeichnet, daß die Protonema-Herstellung auf sexuellem Wege ausgehend von Elementen der Bryoflora der erneut einzustufenden Umgebung, in Form von Sporen geliefert, durchgeführt wird.

9. Verwendung des biologisch angereicherten Substrats nach einem der Ansprüche 1 bis 5 für die erneute Einstufung von Pioniervegetationen durch Einschließung einer kleinen Menge von Samenkörnern der höheren pflanzlichen Spezies des Prä-Rasens oder Rasens beim Ausstreuen.
